# EUROPÄISCHE PATENTSCHRIFT

(11) **EP 0 926 360 B1**
(45) Veröffentlichungstag und Bekanntmachung des Hinweises auf die Patenterteilung: **17.12.2003**
(21) Anmeldenummer: 98811119.1
(22) Anmeldetag: 10.11.1998
(51) Int. Cl.: F16B 13/08

(54) **Hinterschnittdübel**
Dowel for an undercut anchor hole
Cheville pour trou d'ancrage à contre-dépouille

(30) Priorität: 20.12.1997 DE 19756998
(43) Veröffentlichungstag der Anmeldung: 30.06.1999
(73) Patentinhaber: HILTI Aktiengesellschaft, 9494 Schaan (LI)
(72) Erfinder: Kaibach, Werner, Dipl.Ing., 86807 Buchloe (DE); Raber, Stefan, Dr.Ing., 86916 Kaufering (DE)
(74) Vertreter: Wildi, Roland

(56) Entgegenhaltungen:
- EP-A- 0 067 941
- EP-A- 0 195 188
- EP-A- 0 308 620
- EP-A- 0 518 006
- DE-C- 4 333 471

## Beschreibung

Die Erfindung betrifft einen Hinterschnittdübel gemäss dem Oberbegriff des Patentanspruchs 1.

In der Befestigungstechnik besteht vielfach der Wunsch nach weitgehend spreizdruckfreien Befestigungen. Insbesondere bei geringen Achs- und Randabständen besteht bei Verankerungen mit konventionellen Spreizdübeln die Gefahr von Rissen und sogar Abplatzern im Untergrund. Für derartige abstandskritische und für viele sicherheitsrelevante Befestigungen sind Verankerungssysteme bekannt, bei denen ein speziell ausgebildetes, üblicherweise aus Metall bestehendes Befestigungselement formschlüssig in einem vorbereiteten Bohrloch verankert wird. Dazu wird das Bohrloch in einer definierten Tiefe mit einer Hinterschneidung versehen. Das in das vorbereitete Bohrloch einsetzbare Befestigungselement umfasst eine Ankerstange mit einem sich zum freien Vorderende im Durchmesser erweiternden Kopfteil und eine Spreizhülse mit durch axiale Schlitze voneinander getrennten Spreizsegmenten. Durch eine Relativverschiebung zwischen der Spreizhülse und der Ankerstange sind die auf das Kopfteil auflaufenden Spreizsegmente radial in die Hinterschneidung ausstellbar.

Zur Herstellung der Hinterschneidung werden vielfach spezielle Hinterschnittwerkzeuge verwendet, die mit exzentrisch im Bohrloch umlaufenden Schneiden ausgestattet sind und in einer vorbestimmten Tiefe des zuvor erstellten Bohrlochs fräsend, schabend Material von der Bohrlochwand abtragen, um dieses im gewünschten Umfang zu erweitern. Es sind auch Hinterschnittdübel bekannt, die sich während des Setzvorgangs selbsttätig eine Hinterschneidung im Bohrloch erzeugen. Bei einer beispielsweise aus der DE-A-31 46 027 bekannten Variante der Hinterschnittdübel erfolgt die Erzeugung der Hinterschneidung durch ein meisselndes Abtragen des Materials von der Bohrlochwand infolge der Axialverschiebung der Spreizhülse entlang der sich am Bohrlochgrund abstützenden Ankerstange. Ein anderer Typ eines Hinterschnittdübels ist aus der US-A-4,702,654 bekannt und erzeugt die Hinterschneidung durch eine fräsend, schabende Bearbeitung der Bohrlochwand. Dazu wird die Spreizhülse während ihres axialen Vortriebs auf das Kopfteil der sich am Bohrlochgrund abstützenden Ankerstange zusätzlich rotiert. Die Spreizlappen sind mit Schneiden ausgestattet, die bei der Rotation das Material von der Bohrlochwand abtragen und die Hinterschneidung erzeugen.

Ein Nachteil der bekannten Hinterschnittanker besteht darin, dass die Schleppkurve der Schneidlappen, das ist der Kurvenverlauf, den die in Längsrichtung verlaufende Aussenkontur der Spreizlappen während des Ausstellvorgangs beschreibt, nicht mit der Schnittkurve übereinstimmt, durch welche die Kontur der Hinterschneidung festgelegt wird. In ihrer endgültigen Lage liegen die Spreizlappen daher oft nur linienförmig an der Hinterschnittfläche an. Dadurch wird die Last sehr ungleichmässig in den Untergrund eingeleitet. Erst nach den Vorspannen des Hinterschnittdübels kommt es zu einer einigermassen flächigen Anlage, weil der Untergrund im Anlagebereich überdrückt wird und die Schneidlappen sich verformen. Dabei kann der Untergrund jedoch über Gebühr beansprucht werden, was sich nachteilig auf die erzielbaren Haltewerte auswirken kann.

Aufgabe der vorliegenden Erfindung ist es, diesen Nachteilen der Hinterschnittanker des Stands der Technik abzuhelfen. Es soll ein Hinterschnittdübel, insbesondere ein selbstschneidender Hinterschnittanker, geschaffen werden, bei dem die Voraussetzungen für eine möglichst gleichmässige Lasteinleitung in den Untergrund geschaffen sind. Der Hinterschnittanker soll ein hohes Lastniveau erlauben. Ein Zerstörung des Untergrunds im Bereich der Hinterschneidung bei Belastung soll vermieden werden können.

Die Lösung dieser Aufgaben besteht in einem Hinterschnittdübel mit den im kennzeichnenden Abschnitt des Patentanspruchs 1 angeführten Merkmalen. Der erfindungsgemässe Hinterschnittdübel umfasst eine Ankerstange mit einem Schaft, der an seinem rückwärtigen Ende Lastangriffsmittel aufweist und an seinem gegenüberliegenden Vorderende mit einem Kopfteil ausgestattet ist, das sich zum freien Vorderende hin im Durchmesser erweitert, und eine über die Ankerstange geschobene, längsverschiebbare Spreizhülse. Die Spreizhülse weist an ihrem dem Kopfteil zugewandten, vorderen Ende vorzugsweise mit Schneiden ausgestattete Spreizlappen auf, die durch Längsschlitze voneinander getrennt sind und sich in Richtung des Kopfteils erstrecken. In einem Übergangsbereich zu den Spreizlappen besitzt die Spreizhülse eine Wandstärke, die unter Bildung eines plastischen Gelenks in Richtung des vorderen Endes der Spreizhülse abnimmt.

Durch die erfindungsgemässe Ausbildung eines plastischen Gelenks mit in Richtung des vorderen Endes der Spreizhülse abnehmender Wandstärke ist beim radialen Ausstellen der Spreizlappen infolge des Auftreibens der Spreizhülse auf das Kopfteil eine definierte plastische Verformung der Spreizhülse im Gelenk gewährleistet. Der sich in axialer Richtung erstreckende Umlenkbereich der Spreizlappen wandert mit zunehmendem Auftreiben der Spreizhülse auf das sich im Durchmesser erweiternde Kopfteil vom durchmesserkleinsten Abschnitt des plastischen Gelenks nach rückwärts. Dadurch werden die Spreizlappen nicht mehr bloss radial ausgeklappt. Durch den definiert wandernden Umlenkbereich wird den Spreizlappen beim Setzvorgang zusätzlich ein torischer Verlauf gegeben. Dadurch sind die Voraussetzungen für eine möglichst gute Übereinstimmung von Schneid- und Schleppkurve der Spreizlappen geschaffen. Die erzeugte Hinterschneidung weist eine bessere Übereinstimmung mit der Geometrie der Schneidlappen auf, und die Schneidlappen liegen weitgehend flächig an. Bei der Lasteinleitung wird die Kraft gleichmässiger in den Untergrund eingeleitet und die Gefahr von Überdrückungen des Untergrunds ist verringert.

Der das plastische Gelenk bildende Übergangsbereich zu den Spreizlappen kann durch einen in Richtung des vorderen Endes der Spreizhülse sich erweiternden Abschnitt der Durchgangsbohrung der Spreizhülse realisiert sein. Aus fertigungstechnischen Gründen erweist es sich jedoch von Vorteil, wenn die Spreizhülse im Übergangsbereich zu den Spreizlappen einen abnehmenden Aussendurchmesser besitzt. Abgesehen von den fertigungstechnischen Vorteilen wird durch diese konstruktive Massnahme im Bereich der Spreizlappen ein Hohlraum geschaffen, der zur Aufnahme von bei der Erzeugung der Hinterschneidung abgebautem Material dienen kann.

Für die Funktion des plastischen Gelenks erweist es sich von Vorteil, wenn der Übergangsbereich, in dem sich die Wandstärke der Spreizhülse verringert, eine axiale Länge aufweist, für die gilt 0,5 · D ≤ I ≤ 3,0 · D, vorzugsweise 1,0 · D ≤ I ≤ 2,0 · D, wobei D für den Anschlussdurchmesser der Ankerstange steht. Die erfindungsgemässe Länge des plastischen Gelenks ermöglicht es den Spreizlappen, sich der Kontur der Aussenfläche des Kopfteils bestmöglich anzupassen. Darüber hinaus ist durch die gewählte Länge des plastischen Gelenks ein relativ grosser Freiraum für die Aufnahme des abgebauten Materials geschaffen, wie es insbesondere bei drehend-schlagend gesetzten Hinterschnittdübeln auftritt.

Die Spreizhülse weist im plastischen Gelenk eine Mindestwandstärke auf, für die gilt 0,05 · T ≤ m ≤ 1,0 · T, vorzugsweise 0,2 · T ≤ m ≤ 0,5 · T. Dabei bezeichnet T die Hälfte der Differenz des Aussendurchmessers der Spreizhülse und des Anschlussdurchmessers der Ankerstange. Die gewählte Mindestwandstärke gewährleistet, dass die Spreizhülse bei bei den zulässigen Belastungen im plastischen Gelenk nicht versagt.

Das plastische Gelenk kann eine Wandstärke aufweisen, die sich stufenweise bis auf den Mindestdurchmesser verringert. Für die Gleichmässigkeit des Wanderns des Umlenkbereichs erweist es sich von Vorteil, wenn sich die Wandstärke stetig verringert. Dazu weist die Spreizhülse im Übergangsbereich einen im wesentlichen konischen Abschnitt auf, dessen Aussenfläche gegenüber der Achse der Spreizhülse um einen Winkel zwischen etwa 2° und etwa 17°, vorzugsweise zwischen etwa 5° und etwa 11°, geneigt verläuft.

In einer zweckmässigen Variante der Erfindung sind die Spreizlappen im Anschluss an den wandstärkenkleinsten Abschnitt des plastischen Gelenks mit einem schulterartig vorstehenden Bereich ausgestettet, der eine im wesentlichen rinförmig umlaufende Anlagefläche aufweist. Die Anlagefläche schliesst im Ausgangszustand mit der Achse der Spreizhülse einen Winkel von etwa 13° bis etwa 33°, vorzugsweise 18° bis 28°, ein. Der schulterartige Bereich kommt am Ende des Setzvorgangs mit seiner Anlagefläche in Anlage zur Bohrlochwand. Dabei kommt es zu einer Zwangszentrierung der Spreizhülse im Bohrloch, und der Übergangsbereich von der Hinterschneidung zum zylindrischen Abschnitt des Bohrlochs wird von der Anlagefläche abgestützt. Auf diese Weise wird verhindert, dass der Übergangsbereich bei Belastung des Hinterschnittdübels abgeschert wird.

Für die Funktion des Hinterschnittdübels, insbesondere im Fall eines drehend-schlagend gesetzten Hinterschnittdübels, ist auch die Länge der die Spreizlappen trennenden Längsschlitze von Bedeutung. Einserseits müssen die Längsschlitze eine Mindestlänge aufweisen, um eine ordnungsgemässes Aufspreizen der Spreizlappen zu gewährleisten. Andererseits darf die Länge der Längsschlitze eine Maximallänge nicht überschreiten, weil dann die Spreizlappen beim drehend-schlagenden Setzvorgang in Umfangsrichtung plastisch verformt werden können und sogar abknicken können. Für die Länge der Längsschlitze gilt daher 1,0 · h ≤ s ≤ 3,0 · h, vorzugsweise 1,3 · h ≤ s ≤ 2,2 · h, wobei h die Länge der Spreizlappen vom Ende des plastischen Gelenks zum vorderen Ende der Spreizhülse bezeichnet. Dabei erweisen sich Spreizlappenlängen von etwa 0,15 · D bis etwa 2,0 · D, vorzugsweise zwischen 0,3 · D und 1,3 · D als sehr zweckmässig. D steht in dieser Beziehung für den Anschlussdurchmesser der Ankerstange.

Zur weiteren Verbesserung der Übereinstimmung von Schneid- und Schleppkurve besitzen die Spreizlappen mit Vorteil torusförmig gekrümmte Aussenflächen. Das Kopf-teil besitzt eine Auflauffläche für die Spreizlappen, die vorzugsweise gekrümmt ausgebildet ist. Dabei nimmt die Krümmung der Auflauffläche in Richtung des freien Vorderendes derart zu, dass sich im wesentlichen die Form eines Schalltrichters ergibt. Durch diese Geometrie der Auflauffläche des Kopfteils ergibt sich, insbesondere in Verbindung mit torischen Spreizlappen, eine optimale Übereinstimmung von Schneid- und Schleppkurve der beim Setzvorgang radial ausgestellten Spreizlappen.

Im folgenden wird die Erfindung unter Bezugnahme auf ein in den Figuren schematisch dargestelltes Ausführungsbeispiel näher erläutert. Es zeigen:
- Fig. 1: einen Längsschnitt des erfindungsgemässen Hinterschnittdübels mit der Spreizhülse in Ausgangsposition (links) und in Endposition (rechts); und
- Fig. 2: eine vergrösserte Dastellung des vorderen Bereichs des Hinterschnittdübels gemäss Fig. 1.

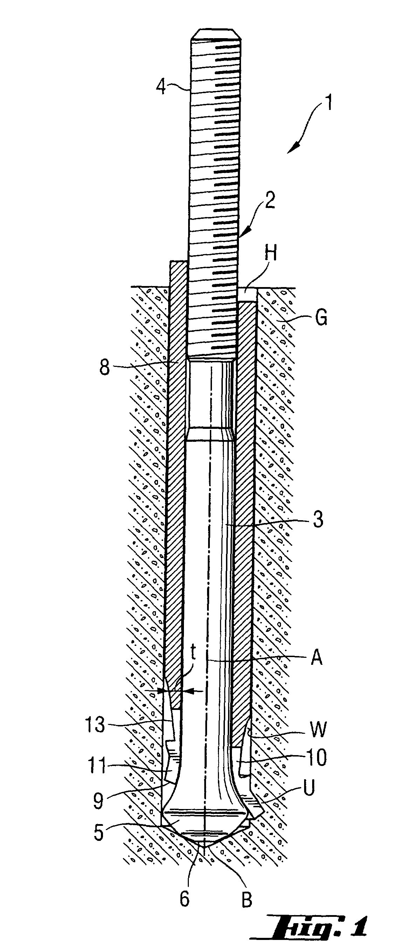

Der in Fig. 1 beispielhaft dargestellte Hinterschnittdübel ist gesamthaft mit dem Bezugszeichen 1 versehen. Der Hinterschnittdübel 1 ist in ein Bohrloch H in einem Untergrund G, beispielsweise in Beton eingesetzt dargestellt. Die linke Hälfte der Fig. 1 zeigt den Hinterschnittdübel dabei im Ausgangszustand, während in der rechten Hälfte der im Untergrund G verankerte Hinterschnittdübel 1 dargestellt ist. Der Hinterschnittdübel 1 weist eine Ankerstange 2 auf, die einen zylindrischen Schaft 3 umfasst, der an seinem rückwärtigen, teilweise aus dem Bohrloch H ragenden Abschnitt mit einem Aussengewinde 4 als Lastangriffsmittel versehen ist. An seinem gegenüberliegenden Ende weist der Schaft 3 ein Kopfteil 5 auf, das sich in Richtung des freien Vorderendes 6 im Durchmesser erweitert. Eine zylindrische Spreizhülse 8 ist auf den Schaft 3 aufgeschoben und axial verschiebbar. Die gemeinsame Achse der Ankerstange 2 und der Spreizhülse 8 trägt das Bezugszeichen A. Die Spreizhülse 8 ist an ihrem dem Kopfteil 5 zugewandten vorderen Ende 9 mit Spreizlappen 11 ausgestattet, die durch Längsschlitze 10 voneinander getrennt sind. Die Spreizlappen 11 sind mit nicht näher bezeichneten Schneiden ausgestattet, die beim Auftreiben der Spreizhülse 8 auf das sich am Bohrlochgrund B abstützende Kopfteil 5 meisselnd - bei rein schlagendem Vortreiben - oder fräsend, schabend - bei drehend-schlagendem Vortreiben - Material von der Bohrlochwand W abtragen, um eine Hinterschneidung U für eine formschlüssige Verankerung im Untergrund G zu erzeugen.

Beim Auftreiben der Spreizhülse 8 auf das sich im Durchmesser erweiternde Kopfteil 5 werden die Spreizlappen 11 radial ausgestellt. Dabei werden sie um ein plastisches Gelenk umgelenkt, das von einem sich axial erstreckenden Übergangsbereich 13 von der Spreizhülse 8 zu den Spreizlappen 11 gebildet ist. Im Übergangsbereich 13 weist die Spreizhülse 8 eine Wandstärke t auf, die sich in Richtung des vorderen Endes 9 verringert. Dadurch wird ein plastisches Gelenk mit einem axial variablen Umlenkbereich geschaffen. Durch das schlagende Vortreiben der Spreizhülse 8 knickt das plastische Gelenk 13 zunächst im wandstärkenkleinsten Bereich. Beim weiteren Auftreiben der Spreizhülse 8 auf das Kopfteil 5 wandert der Umlenkbereich mit zunehmender Wandstärke t der Spreizhülse 8 nach rückwärts.

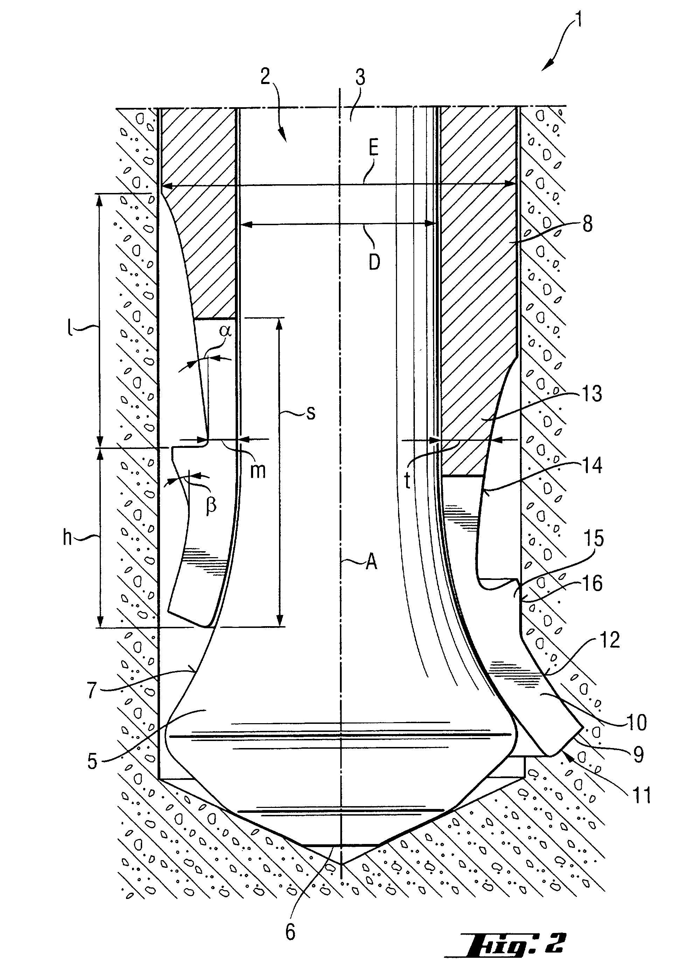

Fig. 2 zeigt den erfindungsrelevanten vorderen Abschnitt des Hinterschnittdübels 1 in vergrössertem Massstab. Die Darstellungsart ist analog zu Fig. 1 gewählt, indem der Hinterschnittdübel 1 links der Achse A im Ausgangszustand gezeigt ist, während die rechte Hälfte der Fig. 2 die Spreizhülse 8 des Hinterschnittdübels 1 in ihrer Endlage zeigt. Das an den Schaft 3 der Ankerstange 2 einteilig angeformte Kopfteil 5 stützt sich am Bohrlochgrund ab. Wie aus Fig. 2 ersichtlich ist, erstreckt sich der Übergangsbereich 13 der Spreizhülse 8 zu den Spreizlappen 11 über eine axiale Länge I. Die Länge I, entlang der die Wandstärke t der Spreizhülse 8 auf eine Mindestwandstärke m abnimmt, ist derart gewählt, dass 0,5 · D ≤ I ≤ 3,0 · D, vorzugsweise 1,0 · D ≤ I ≤ 2,0 · D, wobei D für den Anschlussdurchmesser der Ankerstange 2 steht. Der Übergangbereich 13 weist eine im wesentlichen konusflächenförmige Aussenfläche 14 auf, die gegenüber der Achse A der Spreizhülse 8 um einen Winkel α zwischen etwa 2° und etwa 17°, vorzugsweise zwischen etwa 5° und etwa 11°, geneigt verläuft. Für die Mindestwandstärke m gilt 0,05 · T ≤ m ≤ 1,0 · T, vorzugsweise 0,2 · T ≤ m ≤ 0,5 · T, wobei T die Hälfte der Differenz des Aussendurchmessers E der Spreizhülse 8 und des Anschlussdurchmessers D der Ankerstange 2 bezeichnet.

An den wandstärkenkleinsten Abschnitt des Übergangsbereichs 13 schliesst ein schulterartig vorstehender Bereich 15 der Spreizlappen 11 an. Der schulterartige Bereich 15 besitzt eine Anlagefläche 16, die gegenüber der Achse A um einen Winkel β geneigt ist, der zwischen etwa 13° und etwa 33°, vorzugsweise zwischen 18° und 28°, beträgt. Im radial ausgestellten Zustand der Spreizlappen 11 liegt der schulterartige Bereich 15 mit der Anlagefläche 16 an der Bohrlochwand an und stützt den Übergang zur Hinterschneidung gegen Abscheren. Von der Anlagefläche 16 zum vorderen Ende 9 der Spreizhülse 8 erstreckt sich eine Aussenfläche 12 der Spreizlappen 11, die torisch konkav ausgebildet ist. Die Länge der Spreizlappen 11 vom Ende des plastischen Gelenks 13 zum vorderen Ende 9 der Speizhülse 11 ist mit dem Bezugszeichen h versehen. Für die Länge h der Spreizlappen gilt 0,15 · D ≤ h ≤ 2,0 · D, vozugsweise 0,3 · D ≤ h ≤ 1,3 · D, wobei D für den Anschlussdurchmesser der Ankerstange 2 steht.

Wie aus Fig. 2 ersichtlich ist, weisen die Längsschlitze 10, durch welche die Spreizlappen 11 getrennt sind, eine Länge s auf. Für die Länge s gilt 1,0 · h ≤ s ≤ 3,0 · h, vorzugsweise 1,3 · h ≤ s ≤ 2,2 · h, wobei h die Länge der Spreizlappen 11 vom Ende des plastischen Gelenks 13 zum vorderen Ende 9 der Spreizhülse 8 bezeichnet. Ein Hinterschnittdübel 1 mit einer Ankerstange 2, die einen Anschlussdurchmesser D von 10 mm besitzt, weist beispielsweise eine Schlitzlänge von etwa 14 mm auf; bei Anschlussdurchmessern D von 12 mm bzw. 16 mm betragen die Schlitzlängen s beispielsweise etwa 18 mm bzw. etwa 25 mm. Wie ebenfalls in Fig. 2 dargestellt ist, besitzt das Kopfteil 5 eine Auflauffläche 7, die gekrümmt ist. Dabei nimmt die Krümmung vom zylindrischen Schaft 3 in Richtung des freien Vorderendes der Ankerstange 2 zu. Die Auflauffläche 7, entlang der die Spreizlappen 11 beim Setzvorgang abgleiten, erhält dadurch etwa die Form der Aussenfläche eines Schalltrichters.

Die erfindungsgemässe Geometrie des plastischen Gelenks 13, die Form der Spreizlappen 11 und die Kopfgeometrie gewährleisten eine optimale Anpassung von Schneid- und Schleppkurve der Spreizlappen 11 beim Setzvorgang. Das sich in axialer Richtung erstreckende plastische Gelenk 13 ermöglicht es den Spreizlappen 11, sich dem Verlauf der Auflauffläche 7 am Kopfteil 5 anzupassen. Durch den im wesentlichen konusflächenförmigen Verlauf der Aussenfläche 14 des plastischen Gelenks 13 wird zwischen der Spreizhülse 11 und der Bohrlochwand ein Hohlraum geschaffen. Der Hohlraum kann zur Unterbringung eines Teils des bei der Erzeugung der Hinterschneidung von der Bohrlochwand abgetragenen Materials genutzt werden.

## Patentansprüche

1. Hinterschnittdübel mit einer Ankerstange (2), die einen Schaft (3) umfasst, der an seinem rückwärtigen Ende Lastangriffsmittel (4) aufweist und an seinem gegenüberliegenden Ende mit einem Kopfteil (5) ausgestattet ist, das sich zum freien Vorderende (6) hin im Durchmesser erweitert, und einer über die Ankerstange (2) geschobenen, längsverschiebbaren Spreizhülse (8), die an ihrem dem Kopfteil (5) zugewandten, vorderen Ende (9) vorzugsweise mit Schneiden ausgestattete Spreizlappen (11) aufweist, die durch Längsschlitze (10) voneinander getrennt sind und sich in Richtung des Kopfteils (5) erstrecken, **dadurch gekennzeichnet, dass** die Spreizhülse (8) in einem sich in axialer Richtung erstreckenden Übergangsbereich (13) zu den Spreizlappen (11) eine Wandstärke (t) aufweist, die unter Bildung eines plastischen Gelenks in Richtung des vorderen Endes (9) der Spreizhülse (11) abnimmt.

2. Hinterschnittdübel nach Anspruch 1, **dadurch gekennzeichnet, dass** die Spreizhülse (11) im Übergangsbereich (13) zu den Spreizlappen (11) einen abnehmenden Aussendurchmesser aufweist.

3. Hinterschnittdübel nach Anspruch 1 oder 2, **dadurch gekennzeichnet, dass** der das plastische Gelenk bildende Übergangsbereich (13), in dem sich die Wandstärke (t) der Spreizhülse (11) verringert, eine axiale Länge (I) aufweist, für die gilt 0,5 · D ≤ I ≤ 3,0 · D, vorzugsweise 1,0 · D ≤ I ≤ 2,0 · D, wobei D für den Anschlussdurchmesser der Ankerstange (2) steht.

4. Hinterschnittdübel nach Anspruch 3, **dadurch gekennzeichnet, dass** die Spreizhülse (8) im plastischen Gelenk (13) eine Mindestwandstärke (m) aufweist, für die gilt 0,05 · T ≤ m ≤ 1,0 · T, vorzugsweise 0,2 · T ≤ m ≤ 0,5 · T, wobei T die Hälfte der Differenz des Aussendurchmessers (E) der Spreizhülse (8) und des Anschlussdurchmessers (D) der Ankerstange (2) bezeichnet.

5. Hinterschnittdübel nach Anspruch 3 oder 4, **dadurch gekennzeichnet, dass** der Übergangsbereich (13) als im wesentlichen konischer Abschnitt ausgebildet ist, dessen Aussenfläche (14) gegenüber der Achse (A) der Spreizhülse (8) um einen Winkel (α) zwischen etwa 2° und etwa 17°, vorzugsweise zwischen etwa 5° und etwa 11°, geneigt verläuft.

6. Hinterschnittdübel nach Anspruch 5, **dadurch gekennzeichnet, dass** die Spreizlappen (11) im Anschluss an den wandstärkenkleinsten Abschnitt des plastischen Gelenks (13) einen schulterartig vorstehenden Bereich (15) mit einer im wesentlichen rinförmig umlaufenden Anlagefläche (16) aufweisen, die im Ausgangszustand mit der Achse (A) der Spreizhülse (11) einen Winkel (β) von etwa 13° bis etwa 33°, vorzugsweise 18° bis 28°, einschliesst.

7. Hinterschnittdübel nach einem der vorangehenden Ansprüche, **dadurch gekennzeichnet, dass** die Längsschlitze (10) eine Länge (s) aufweisen für die gilt 1,0 · h ≤ s ≤ 3,0 · h, vorzugsweise 1,3 · h ≤ s ≤ 2,2 · h, wobei h die Länge der Spreizlappen (11) vom Ende des plastischen Gelenks (13) zum vorderen Ende der Spreizhülse (9) bezeichnet.

8. Hinterschnittdübel nach Anspruch 7, **dadurch gekennzeichnet, dass** für die Länge (h) der Spreizlappen (11) gilt 0,15 · D ≤ h ≤ 2,0 · D, vozugsweise 0,3 · D ≤ h ≤ 1,3 · D, und D für den Anschlussdurchmesser der Ankerstange (2) steht.

9. Hinterschnittdübel nach Anspruch 8, **dadurch gekennzeichnet, dass** die Spreizlappen (11) eine torusförmige Aussenfläche (12) aufweisen.

10. Hinterschnittdübel nach einem der vorangehenden Ansprüche, **dadurch gekennzeichnet, dass** das Kopfteil (5) eine gekrümmte Auflauffläche (7) aufweist, deren Krümmung in Richtung des freien Vorderendes (6) zunimmt.

## Claims

1. Undercut plug with an anchor rod (2) having a shaft (3) which is equipped, on its rear end, with load application means (4) and, on its opposing end, with a head member (5), which towards its free front end (6) expands in its diameter, and a longitudinally displaceable spreading sleeve (8) pushed over the anchor rod (2) which on its front end (9) facing towards the head member (5) has spreading lugs (11) preferably equipped with blades, which are separated from each other by longitudinal slits (10) and extend in the direction of the head member (5), **characterised in that** in a transition region (13) to the spreading lugs (11) extending in the axial direction, the spreading sleeve (8) has a wall thickness (t) which, forming a plastic joint, decreases in the direction of the front end (9) of the spreading sleeve (11).

2. Undercut plug according to Claim 1, **characterised in that** the spreading sleeve (11) has a decreasing external diameter in the transition region (13) to the spreading lugs (11) .

3. Undercut plug according to Claim 1 or 2, **characterised in that** the transition region (13) comprising the plastic joint in which the wall thickness (t) of the spreading sleeve (11) decreases has a length (1) for which 0.5 . D ≤ 1 ≤ 3.0 . D, and preferably 1.0 . D ≤ 1 ≤ 2.0 . D applies, where D denotes the connecting diameter of the anchor rod (2).

4. Undercut plug according to Claim 3, **characterised in that** the spreading sleeve (8) has a minimum wall thickness (m) in the plastic joint (13) for which 0.05 . T ≤ m ≤ 1.0 . T, and preferably 0.2 . T ≤ m ≤ 0.5 . T applies, where T denotes half of the difference of the external diameter (E) of the spreading sleeve (8) and of the connecting diameter (D) of the anchor rod (2).

5. Undercut plug according to Claim 3 or 4, **characterised in that** the transition region (13) is designed as a substantially conical section, whose external surface (14) runs inclined relative to the axis (A) of the spreading sleeve (8) at an angle (α) of between approximately 2° and approximately 17°, and preferably between approximately 5° and approximately 11°.

6. Undercut plug according to Claim 5, **characterised in that**, adjoining the section of the plastic joint (13) where the wall thickness is smallest, the spreading lugs (11) have a shoulder-like projecting region (15) with a substantially ring-shaped surrounding contact surface (16) which, in the starting condition encloses an angle (β) with the axis (A) of the spreading sleeve (11) of between approximately 13° and approximately 33°, and preferably between 18° and 28°.

7. Undercut plug according to one of the previous claims, **characterised in that** the longitudinal slits (10) have a length (s) for which 1.0 . h ≤ s ≤ 3.0 . h, and preferably 1.3 . h ≤ s ≤ 2.2 . h applies, where h denotes the length of the spreading lugs (11) from the end of the plastic joint (13) to the front end of the spreading sleeve (9).

8. Undercut plug according to Claim 7, **characterised in that** for the length (h) of the spreading lugs (11), 0.15 . D ≤ h ≤ 2.0 . D, and preferably 0.3 . D ≤ h ≤ 1.3 D, where D denotes the connecting diameter of the anchor rod (2).

9. Undercut plug according to Claim 8, **characterised in that** the spreading lugs (11) have a toroidal-shaped external surface (12).

10. Undercut plug according to one of the previous claims, **characterised in that** the head member (5) has a curved rising surface (7) whose curvature increases in the direction of the free front end (6).

## Revendications

1. Cheville à contre-dépouille avec une tige d'ancrage (2) qui comprend une tige (3), laquelle comporte, à son extrémité arrière, des moyens d'application de charge (4) et est munie, à son extrémité opposée, d'une partie de tête (5) qui croît en diamètre vers l'extrémité avant libre (6), et avec un manchon expansible à coulissement longitudinal (8) qui est enfilé sur la tige d'ancrage (2) et qui comporte, à son extrémité avant (9) tournée vers la partie de tête (5), des pattes expansibles (11), lesquelles sont munies de préférence de taillants, sont séparées les unes des autres par des fentes longitudinales (10) et s'étendent en direction de la partie de tête (5), **caractérisée en ce que** le manchon expansible (8) présente, dans une zone de transition (13) avec les pattes expansibles (11) s'étendant dans la direction axiale, une épaisseur de paroi (t) qui, en formant une articulation plastique, décroît en direction de l'extrémité avant (9) du manchon expansible (11).

2. Cheville à contre-dépouille selon la revendication 1, **caractérisée en ce que** le manchon expansible (11) présente un diamètre extérieur décroissant dans la zone de transition (13) avec les pattes expansibles (11).

3. Cheville à contre-dépouille selon la revendication 1 ou 2, **caractérisée en ce que** la zone de transition (13) qui forme l'articulation plastique et dans laquelle l'épaisseur de paroi (t) du manchon expansible (11) diminue présente une longueur axiale (1) pour laquelle prévaut la relation 0,5 • D ≤ 1 ≤ 3,0 • D, de préférence 1,0 • D ≤ 1 ≤ 2,0 • D, D représentant le diamètre de raccordement de la tige d' ancrage (2).

4. Cheville à contre-dépouille selon la revendication 3, **caractérisée en ce que**, dans l'articulation plastique (13), le manchon expansible (8) présente une épaisseur minimale de paroi (m) pour laquelle prévaut la relation 0,05 • T ≤ m ≤ 1,0 • T, de préférence 0,2 • T ≤ m ≤ 0,5 • T, T désignant la moitié de la différence du diamètre extérieur (E) du manchon expansible (8) et du diamètre de raccordement (D) de la tige d'ancrage (2).

5. Cheville à contre-dépouille selon la revendication 3 ou 4, **caractérisée en ce que** la zone de transition (13) est conformée en portion sensiblement conique dont la face extérieure (14) s'étend en biais par rapport à l'axe (A) du manchon expansible (8) selon un angle (α) compris entre environ 2° et environ 17°, de préférence entre environ 5° et environ 11°.

6. Cheville à contre-dépouille selon la revendication 5, **caractérisée en ce que**, à la suite de la portion à épaisseur de paroi minimale de l'articulation plastique (13), les pattes expansibles (11) présentent une zone saillante formant épaulement (15) avec une surface d'appui sensiblement périphérique annulaire (16) qui, à l'état initial, forme avec l'axe (A) du manchon expansible (11), un angle (β) d'environ 13° à environ 33°, de préférence de 18° à 28°.

7. Cheville à contre-dépouille selon une des revendications précédentes, **caractérisée en ce que** les fentes longitudinales (10) présentent une longueur (s) pour laquelle prévaut la relation 1,0 • h ≤ s ≤ 3,0 • h, de préférence 1,3 • h ≤ s ≤ 2,2 • h, h désignant la longueur des pattes expansibles (11) de l'extrémité de l'articulation plastique (13) à l'extrémité avant du manchon expansible (9).

8. Cheville à contre-dépouille selon la revendication 7, **caractérisée en ce que**, pour la longueur (h) des pattes expansibles (11) prévaut la relation 0,15 • D ≤ h ≤ 2,0 • D, de préférence 0,3 • D ≤ h ≤ 1,3 • D, et D représentant le diamètre de raccordement de la tige d'ancrage (2).

9. Cheville à contre-dépouille selon la revendication 8, **caractérisée en ce que** les pattes expansibles (11) présentent une face extérieure torique (12).

10. Cheville à contre-dépouille selon une des revendications précédentes, **caractérisée en ce que** la partie de tête (5) présente une surface ascendante courbe (7) dont la courbure augmente en direction de l'extrémité avant libre (6).
